# EUROPÄISCHE PATENTANMELDUNG

(11) **EP 4 566 866 A1**
(43) Veröffentlichungstag der Anmeldung: **11.06.2025**
(21) Anmeldenummer: 24211619.2
(22) Anmeldetag: 08.11.2024
(51) Int. Cl.: B60L 53/10, B60L 53/30, B60L 53/62, B60L 53/67

(54) **SCHNELLLADESTATION FÜR ELEKTROFAHRZEUGE**

(30) Priorität: 08.11.2023 DE 102023130911
(71) Anmelder: Compleo Charging Solutions GmbH & Co. KG, 58513 Lüdenscheid (DE)
(72) Erfinder: WOHLFAHRT, Thomas, 45721 Haltern am See (DE); JEURINK, Steffen, 48165 Münster-Hiltrup (DE); GARMABAD, Mahyar, 45149 Essen (DE)
(74) Vertreter: Gottschald Patentanwälte Partnerschaft mbB

(57) **Zusammenfassung**

Die Erfindung betrifft eine Schnellladestation für Elektrofahrzeuge (2), wobei die Schnellladestation (1) mehrere Leistungsmodule (4) aufweist, wobei die Leistungsmodule (4) jeweils eine Stromrichteranordnung (5) insbesondere zur Wandlung einer Wechselspannung als Eingangsspannung der Schnellladestation (1) in eine Gleichspannung als Ausgangsspannung der Schnellladestation (1) aufweisen, wobei die Leistungsmodule (4) Ausgangsanschlüsse (6) aufweisen, an denen das Leistungsmodul (4) elektrische Leistung mit geregelten Ausgangsparametern abgibt, wobei die Ausgangsanschlüsse (6) von mindestens zwei Leistungsmodulen (4) zur Abgabe elektrischer Leistung an mindestens einem Anschlusspunkt (3) der Schnellladestation (1) zu einer ersten Gruppe (7) parallel geschaltet werden. Es wird vorgeschlagen, dass die erste Gruppe (7), insbesondere immer genau, ein Primärmodul (9) und mindestens ein Sekundärmodul (10) aufweist, dass die Leistungsmodule (4) jeweils ein Regelungsmodul (11) aufweisen, das die Stromrichteranordnung (5) des jeweiligen Leistungsmoduls (4) regelt, dass das Regelungsmodul (11) des Primärmoduls (9) eine Gesamtregelung für den Anschlusspunkt (3) übernimmt, dass das Regelungsmodul (11) oder die Regelungsmodule (11) des Sekundärmoduls (10) oder der Sekundärmodule (10) mindestens einen ihrer Ausgangsparameter regeln.

## Beschreibung

Die vorliegende Erfindung betrifft eine Schnellladestation für Elektrofahrzeuge gemäß dem Oberbegriff von Anspruch 1, ein Verfahren zur Steuerung einer Schnellladestation gemäß dem Oberbegriff von Anspruch 13 sowie ein Leistungsmodul eingerichtet zur Verwendung in einer Schnellladestation gemäß Anspruch 14.

Schnellladestationen, auch bekannt als high performance charger, sind Gleichstromladestationen für elektrische Fahrzeuge, insbesondere Automobile, aber auch Lastkraftfahrzeuge, Schiffe und dergleichen.

Es sind Schnellladestationen bekannt, beispielsweise der Hypercharger von Alpitronic, die mehrere Leistungsmodule aufweisen. Leistungsmodule weisen jeweils eine Stromrichteranordnung auf, die hier eine Wechselspannung am Eingang in eine Gleichspannung am Ausgang umwandelt. Statt einer Stromrichteranordnung für die gesamte Schnellladestation werden also mehrere verwendet. Das ermöglicht zum Beispiel eine flexible Verteilung der Leistungsmodule auf Anschlusspunkte, kleinere und ggf. effizientere Leistungselektronik und dergleichen.

Bei Schnellladestationen mit Leistungsmodulen ist denkbar, die Leistungsmodule parallel oder in Reihe zu schalten, oder komplexere Misch-Verschaltungen zu wählen. Bei der Entscheidung für die Verschaltung handelt es sich um eine grundsätzliche Entscheidung, da die sich daraus ergebenden Herausforderungen für die Regelung der Leistungsmodule naturgemäß sehr unterschiedlich sind. Bei einer bekannten Schnellladestation weisen die Leistungsmodule Ausgangsanschlüsse auf, an denen das Leistungsmodul elektrische Leistung mit geregelten Ausgangsparametern abgibt, wobei die Ausgangsanschlüsse von mindestens zwei Leistungsmodulen zur Abgabe elektrischer Leistung an mindestens einem Anschlusspunkt der Schnellladestation zu einer ersten Gruppe parallel geschaltet werden.

In einer solchen Konfiguration sind mehrere Regelungskonzepte für die Leistungsmodule denkbar. Denkbar ist zum Beispiel, dass eine zentrale Leistungssteuereinheit die Leistungsmodule regelt. Problematisch dabei ist allerdings, dass die zentrale Steuereinheit dann eine sehr schnelle Kommunikation mit den Leistungsmodulen und eine hohe Verarbeitungsgeschwindigkeit aufweisen muss. Denkbar ist auch, dass jedes Leistungsmodul sich selbst regelt. Dann stellt sich jedoch die Frage, wie die Leistungsmodule aufeinander abgestimmt werden können.

Es ist dabei eine Herausforderung, den bekannten Stand der Technik zu verbessern und ein effizientes und kostengünstiges Regelungskonzept anzugeben.

Der Erfindung liegt das Problem zugrunde, die bekannten Schnellladestationen derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass ein Leistungsmodul als Primärmodul und mindestens ein weiteres, zumeist alle weiteren, Leistungsmodul als Sekundärmodul genutzt werden kann. Dem Primärmodul wird die Aufgabe zuteil, mindestens eine Gesamtregelung für einen elektrischen Parameter, zumeist Spannung, Strom oder Leistung, des Anschlusspunktes zu übernehmen, während die Sekundärmodule ihre eigenen Parameter regeln.

Ändert sich die Leistungsanforderung eines Elektrofahrzeugs abrupt, beispielsweise weil ein Verbraucher wie eine Heizung eingeschaltet wird, übernimmt das Primärmodul die erste Reaktion und stellt sicher, dass die elektrischen Parameter am Anschlusspunkt an die neue Leistungsanforderung angepasst werden.

Eine eventuell vorhandene Leistungssteuereinheit kann somit mit weniger Rechenkapazität und einer langsameren Kommunikationsanbindung angeschlossen werden, da sie in die erste Reaktion nicht eingebunden ist. Auch eine Kommunikation zwischen den Leistungsmodulen, sofern überhaupt vorhanden, muss nicht schnell genug sein, um auf schlagartige Änderungen am Anschlusspunkt zu reagieren.

Im Einzelnen wird vorgeschlagen, dass die erste Gruppe, insbesondere immer genau, ein Primärmodul und mindestens ein Sekundärmodul aufweist, dass die Leistungsmodule jeweils ein Regelungsmodul aufweisen, das die Stromrichteranordnung des jeweiligen Leistungsmoduls regelt, dass das Regelungsmodul des Primärmoduls eine Gesamtregelung für den Anschlusspunkt übernimmt, dass das Regelungsmodul oder die Regelungsmodule des Sekundärmoduls oder der Sekundärmodule mindestens einen ihrer Ausgangsparameter regeln.

Bei einer besonders bevorzugten Ausgestaltung gemäß Anspruch 2 regelt das Primärmodul die Gesamtspannung, indem es seine eigene Ausgangsspannung regelt und/oder das Sekundärmodul regelt seinen Ausgangsstrom. Änderungen am Anschlusspunkt werden so auf einfache Art und Weise nur von dem Primärmodul ausgeregelt, während im ersten Moment die Sekundärmodule schlicht weiter ihren Strom stellen.

Anspruch 3 betrifft bevorzugte Ausgestaltungen des Leistungsmoduls als Einheit mit ihrem Regelungsmodul. Ist das Regelungsmodul nicht abgesetzt vom Rest des Leistungsmoduls ist ein Austausch des gesamten Leistungsmoduls einfach möglich und Verzögerungen durch Kommunikationsstrecken für Messwerte und Stellgrößen sind sehr gering.

Die Ansprüche 4 bis 10 betreffen Ausgestaltungen der Schnellladestation mit einer zentralen Leistungssteuereinheit. Die Leistungssteuereinheit kann gemäß Anspruch 4 Regelungsvorgaben für die Leistungsmodule erstellen und so insbesondere den Sekundärmodulen jeweils einen Ausgangsstrom zuweisen. Eine solche Konfiguration vereinfacht die Gesamtregelung und ermöglicht beispielsweise, dass das Primärmodul und die Sekundärmodule identisch sind, ohne jeweils die Funktionalität der Leistungssteuereinheit aufweisen zu müssen.

Gemäß Anspruch 5 kann die Leistungssteuereinheit dafür einen vom Elektrofahrzeug vorgegebenen Soll-Ausgangsstrom verteilen. Bei Ausgestaltungen gemäß Anspruch 5 und/oder 6 beteiligt sich auch das Primärmodul an einer Stromregelung, allerdings auf andere Art und Weise. Es kann vorgesehen sein, dass ein Gesamtstromsensor vorgesehen ist, der den Ausgangsstrom des Anschlusspunktes misst. Diese Messwerte werden dann vorzugsweise von der Leistungssteuereinheit an das Primärmodul weitergegeben, sodass das Primärmodul auch den Gesamtstrom regeln kann.

Bei einer Ausgestaltung gemäß Anspruch 7 erstellt die Leistungssteuereinheit die Regelungsvorgaben so, dass das Primärmodul eine hohe Regelreserve für abrupte Änderungen am Anschlusspunkt aufweist.

Bei Ausgestaltungen gemäß Anspruch 8 wird bei der Zuteilung von Leistungsmodulen zum Anschlusspunkt berücksichtigt, wie effizient diese Zuteilung ist. Beispielsweise kann die Verwendung von zwei Leistungsmodulen mit 50 % ihrer Leistung effizienter sein als die Verwendung eines Leistungsmoduls mit 100 % seiner Leistung. Die Zuteilung kann während des Ladevorgangs nach Effizienzgesichtspunkten angepasst werden.

Anspruch 9 betrifft eine Ausgestaltung bei der die Leistungssteuereinheit über einen Bus, insbesondere CAN-Bus, mit den Leistungsmodulen verbunden ist. Die Kommunikation läuft dabei vorzugsweise langsamer ab als für eine Regelung durch die Leistungssteuereinheit notwendig wäre.

Ebenfalls kann durch die Leistungssteuereinheit bei der Zuordnung der Leistungsmodule zu dem Anschlusspunkt eine Alterungsmetrik berücksichtigt werden, sodass zum Beispiel ein älteres Leistungsmodul weniger belastet wird (Anspruch 10).

Eine besonders bevorzugte Ausgestaltung gemäß Anspruch 11 betrifft die Möglichkeit, das Primärmodul frei aus den Leistungsmodulen auszuwählen, wodurch die Schnellladestation selbst bei Ausfall eines Leistungsmoduls weiter benutzt werden kann.

Gemäß Anspruch 12 kann ein weiterer Anschlusspunkt vorgesehen sein.

Nach einer weiteren Lehre gemäß Anspruch 13, der eigenständige Bedeutung zukommt, wird ein Verfahren zur Steuerung einer Schnellladestation beansprucht.

Dabei ist wesentlich, dass die erste Gruppe, insbesondere immer genau, ein Primärmodul und mindestens ein Sekundärmodul aufweist, dass die Leistungsmodule jeweils ein Regelungsmodul aufweisen, das die Stromrichteranordnung des jeweiligen Leistungsmoduls regelt, dass das Regelungsmodul des Primärmoduls eine Gesamtregelung für den Anschlusspunkt übernimmt, dass das Regelungsmodul oder die Regelungsmodule des Sekundärmoduls oder der Sekundärmodule mindestens einen ihrer Ausgangsparameter regeln.

Auf alle Ausführungen zu der vorschlagsgemäßen Schnellladestation darf verwiesen werden.

Nach einer weiteren Lehre gemäß Anspruch 14, der ebenfalls eigenständige Bedeutung zukommt, wird ein Leistungsmodul eingerichtet zur Verwendung in einer vorschlagsgemäßen Schnellladestation beansprucht.

Auf alle Ausführungen zu der vorschlagsgemäßen Schnellladestation und dem vorschlagsgemäßen Verfahren darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße Schnellladestation,
- Fig. 2: Leistungsmodule in der Schnellladestation,
- Fig. 3: schematisch die Abgabe elektrischer Leistung durch mehrere Leistungsmodule,
- Fig. 4: eine bevorzugte Ausgestaltung der Regelungen der verschiedenen Leistungsmodule und die Einbindung der Leistungssteuereinheit und
- Fig. 5: exemplarische Strom- und Spannungskurven eines Ladevorgangs.

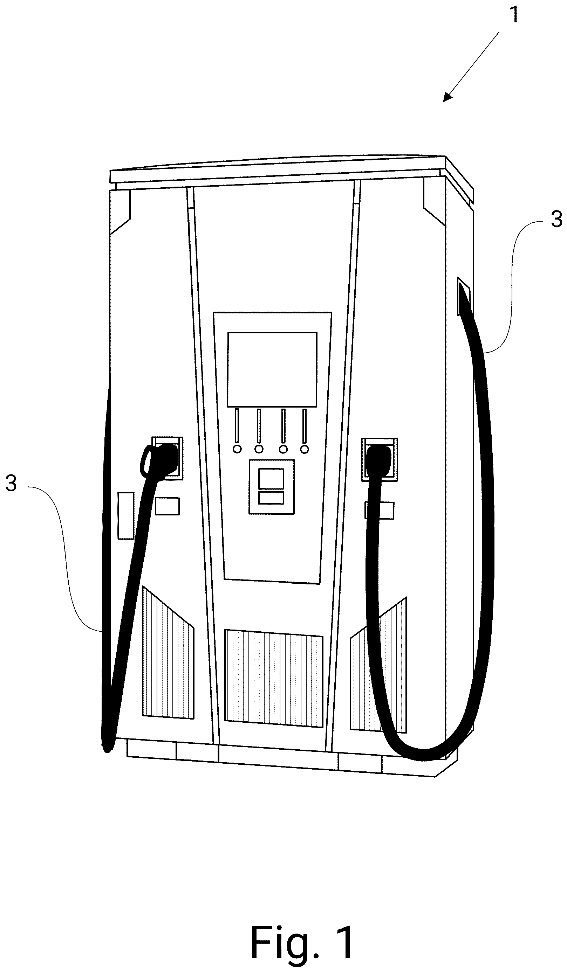

Fig. 1 zeigt eine Außenansicht einer vorschlagsgemäßen Schnellladestation 1 für Elektrofahrzeuge 2. Diese weist mindestens einen Anschlusspunkt 3 für ein Elektrofahrzeug 2, hier ein fest angeschlagenes Ladekabel, auf. Vorzugsweise weist die Schnellladestation 1 mindestens, hier genau, zwei Anschlusspunkte 3 auf. Eine Schnellladestation 1 dient zum Laden eines Elektrofahrzeugs 2 mittels Gleichstroms und einer Leistung von zumeist mindestens 50 kW. Üblicherweise ist die Schnellladestation 1 dafür an ein Wechselstromnetz angeschlossen.

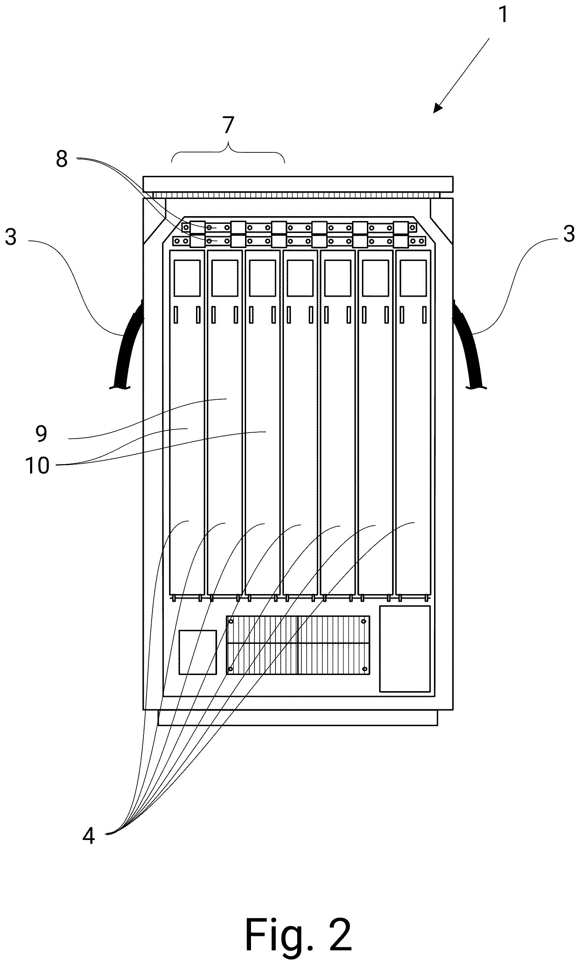

Wie in der geöffneten Ansicht in Fig. 2 erkennbar ist, weist die Schnellladestation 1 mindestens ein einzeln handhabbares Leistungsmodul 4 auf. Hier weist die Schnellladestation 1 sieben Leistungsmodule 4 auf, die jeweils einen Teil der Gesamtleistung der Schnellladestation 1 zur Verfügung stellen, hier beispielsweise jeweils 30 kW. Die Leistungsmodule 4 können hier und vorzugsweise flexibel auf die Anschlusspunkte 3 aufgeteilt werden.

Der Begriff "einzeln handhabbar" ist hier breit zu verstehen. Das Leistungsmodul 4 wiegt hier beispielsweise etwa 39 kg, ist also nicht leicht handhabbar. Es ist jedoch einzeln herausnehmbar und die Komponenten des Leistungsmoduls 4 sind gerade nicht einzeln in der Schnellladestation 1 verbaut.

Das in den Figuren dargestellte und insoweit bevorzugte Ausführungsbeispiel betrifft eine Schnellladestation 1 für Elektrofahrzeuge 2, wobei die Schnellladestation 1 mehrere Leistungsmodule 4 aufweist, wobei die Leistungsmodule 4 jeweils eine Stromrichteranordnung 5 insbesondere zur Wandlung einer Wechselspannung als Eingangsspannung der Schnellladestation 1 in eine Gleichspannung als Ausgangsspannung der Schnellladestation 1 aufweisen. Denkbar ist auch, dass ein AC/DC Wandler für alle Leistungsmodule und getrennte DC/DC Wandler im Leistungsmodul 4 vorgesehen sind. Die Leistungsmodule 4 weisen Ausgangsanschlüsse 6 auf, an denen das Leistungsmodul 4 elektrische Leistung mit geregelten Ausgangsparametern abgibt. Die geregelten Ausgangsparameter können insbesondere die Spannung und/oder den Strom umfassen.

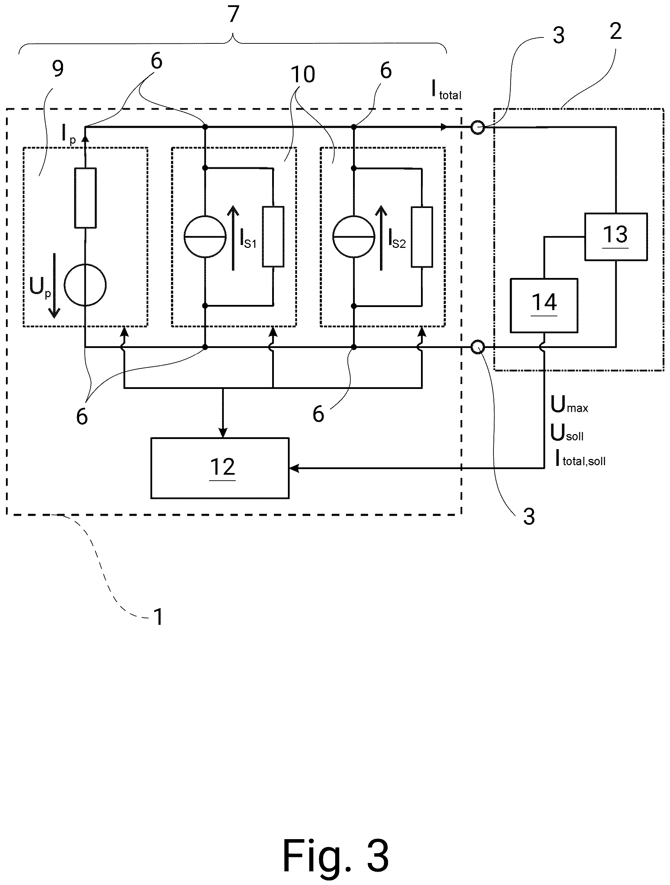

Die Ausgangsanschlüsse 6 von mindestens zwei Leistungsmodulen 4 werden zur Abgabe elektrischer Leistung an mindestens einem Anschlusspunkt 3 der Schnellladestation 1 zu einer ersten Gruppe 7 parallel geschaltet. Fig. 3 zeigt diese Parallelschaltung schematisch für drei Leistungsmodule 4. In manchen Konstellationen, insbesondere bei manchen Ladevorgängen oder zum Ende eines Ladevorgangs kann der Fall eintreten, dass nur ein Leistungsmodul 4 Leistung an einen Anschlusspunkt 3 abgibt. Dieser Fall ist mit der vorschlagsgemäßen Schnellladestation 1 möglich, im Folgenden wird jedoch die Regelung der Leistungsmodule 4 betrachtet, wenn mindestens zwei Leistungsmodule 4 Leistung an den Anschlusspunkt 3 abgeben. Bei der Parallelschaltung addieren sich die Ströme der Leistungsmodule 4 während die Spannungen in der Regel annähernd gleich sein müssen.

Hier und vorzugsweise weist die Leistungselektronik einen Gleichrichter und einen nachgeschalteten Gleichspannungswandler auf, die nicht im Detail dargestellt sind. Erkennbar sind im oberen Bereich der Schnellladestation 1 Gleichspannungsschienen 8 zur Verteilung der Ausgangsleistung der Leistungsmodule 4 auf die Anschlusspunkte 3. Der Wechselspannungseingang ist hier im unteren Bereich angeordnet und nicht dargestellt.

Wesentlich ist nun, dass die erste Gruppe 7 ein Primärmodul 9 und mindestens ein Sekundärmodul 10 aufweist. Bevorzugt weist die erste Gruppe 7 immer genau ein Primärmodul 9 auf. Wie erwähnt ist manchmal kein Sekundärmodul 10 nötig, für die betrachteten Fälle ist jedoch mindestens eines vorhanden.

Die Leistungsmodule 4 weisen jeweils ein Regelungsmodul 11 auf, das die Stromrichteranordnung 5 des jeweiligen Leistungsmoduls 4 regelt. Vorschlagsgemäß ist es dabei so, dass das Regelungsmodul 11 des Primärmoduls 9 eine Gesamtregelung für den Anschlusspunkt 3 übernimmt, und, dass das Regelungsmodul 11 oder die Regelungsmodule 11 des Sekundärmoduls 10 oder der Sekundärmodule 10 mindestens einen ihrer Ausgangsparameter regeln. Die Regelung des Ausgangsparameters des Sekundärmoduls 10 oder der Sekundärmodule 10 erfolgt dabei hier und vorzugsweise so, dass dieser Ausgangsparameter kein Ausgangsparameter des Anschlusspunktes 3 ist.

Besonders bevorzugt und in Fig. 3 dargestellt verhält es sich so, dass das Primärmodul 9 die Gesamtspannung des Anschlusspunkts 3 regelt, insbesondere indem es seine Ausgangsspannung regelt, und so als Spannungsquelle funktioniert, und/oder, dass das Sekundärmodul 10 seinen Ausgangsstrom regelt und so als Stromquelle funktioniert, oder, dass die Sekundärmodule 10 ihren Ausgangsstrom regeln und so als Stromquellen funktionieren. Das Primärmodul 9 regelt also seine Spannung, die bei einer Parallelschaltung im Wesentlichen der Spannung des Anschlusspunktes 3 entspricht. Die Sekundärmodule 10 regeln den Strom, der sich mit dem Strom der anderen Sekundärmodule 10 und des Primärmoduls 9 addiert und somit kein Ausgangsparameter des Anschlusspunktes 3 ist.

Weiter ist hier und vorzugsweise vorgesehen, dass das Regelungsmodul 11 des jeweiligen Leistungsmoduls 4 mit dem Leistungsmodul 4 eine Einheit bildet, insbesondere in dem Leistungsmodul 4 angeordnet ist. Denkbar ist, dass das Regelungsmodul 11 ein eigenes Gehäuse aufweist, das mit einem Gehäuse der Leistungselektronik verbunden ist. Bevorzugt weist das Leistungsmodul 4 jedoch ein äußeres Gehäuse auf, in dem das Regelungsmodul 11 und die Leistungselektronik angeordnet sind. So sind die Signalwege besonders kurz. Die Einheit ist als solche einzeln handhabbar.

Vorzugsweise weisen die Leistungsmodule 4 jeweils einen Ausgangsstromsensor und einen Ausgangsspannungssensor auf, die mit dem Leistungsmodul 4 eine Einheit bilden. Der Datenfluss zwischen dem Ausgangsstromsensor und/oder dem Ausgangsspannungssensor und dem Regelungsmodul 11 verläuft innerhalb der Einheit, insbesondere innerhalb des Leistungsmoduls 4.

Ebenfalls in Fig. 3 dargestellt und hier und vorzugsweise ist es so, dass die Schnellladestation 1 eine Leistungssteuereinheit 12 aufweist. Hier und vorzugsweise weist die Schnellladestation 1 genau eine Leistungssteuereinheit 12 auf, die alle Leistungsmodule 4 und alle Anschlusspunkte 3 betreut.

Die Leistungssteuereinheit 12 erstellt Regelungsvorgaben für die Leistungsmodule 4. Vorzugsweise verteilt die Leistungssteuereinheit 12 eine Ausgangsleistung am Anschlusspunkt 3 über die Regelungsvorgabe auf die Leistungsmodule 4. Dabei kann vorgesehen sein, dass die Leistungssteuereinheit 12 die Ausgangsleistung am Anschlusspunkt 3 indirekt verteilt und einen Ausgangsstrom pro Sekundärmodul 10 als Führungsgröße für die Sekundärmodule 10 erstellt. Wenn die Sekundärmodule 10 wie erwähnt als Stromquelle arbeiten, setzen sie diese Führungsgröße vorzugsweise über ihre Regelungsmodule 11 direkt um, sofern nicht Sicherheitsmechanismen wie eine Spannungsbegrenzung oder dergleichen dagegen sprechen.

Stellgrößen der Regelungsmodule 11 sowohl der Sekundärmodule 10 als auch des Primärmoduls 9 sind hier und vorzugsweise Parameter einer PWM, insbesondere ein Phasenwinkel und ein Duty Cycle einer Phase Shift Steuerung, insbesondere einer Dual Active Bridge, eines DC/DC Wandlers der Stromrichteranordnung 5. Zusätzlich zeigt Fig. 3 noch eine Batterie 13 des Elektrofahrzeugs 2 und ein Batteriemanagementsystem 14 des Elektrofahrzeugs 2, das mit der Schnellladestation 1 kommunizieren kann.

Hier und vorzugsweise erhält die Leistungssteuereinheit 12 vom Elektrofahrzeug 2 einen Soll-Ausgangsstrom, und vorzugsweise eine Soll-Spannung und eine Maximal-Spannung. Die Leistungssteuereinheit 12 verteilt, zumindest in einem Betriebsmodus, den Soll-Ausgangsstrom auf die Leistungsmodule 4. Vorzugsweise ist es dann so, dass die Schnellladestation 1 bis zum Erreichen der Maximal-Spannung insgesamt eine Stromregelung auf den Soll-Strom verfolgt. Die Soll-Spannung kann dabei eher informativ sein und zu Sicherheitszwecken und/oder zum Starten der Regelungen der Regelungsmodule 11 verwendet werden. Vorzugsweise weist die Leistungssteuereinheit 12 dem oder den Sekundärmodulen 10 einen Ausgangsstrom als Führungsgröße zu und teilt dem Primärmodul 9 den Gesamtstrom mit. Letzteres wird im Folgenden näher erläutert.

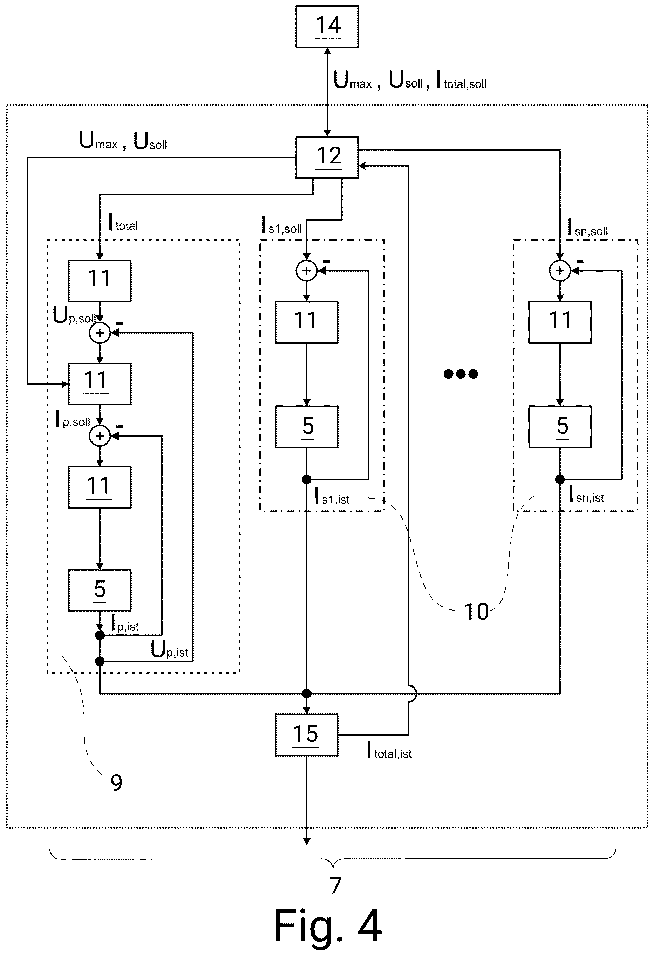

Wie sich aus Fig. 4 ergibt ist es hier und vorzugsweise so, dass das Primärmodul 9 zusätzlich den Gesamtstrom des Anschlusspunkts 3 regelt. Dafür ist vorzugsweise vorgesehen, dass die Schnellladestation 1 einen Gesamtstromsensor 15 pro Anschlusspunkt 3 aufweist, der mit der Leistungssteuereinheit 12 verbunden ist und dass die Leistungssteuereinheit 12 ein Sensorsignal des Gesamtstromsensors 15, insbesondere direkt oder als Regelabweichung, an das Primärmodul 9 weitergibt. Wie sich ebenfalls aus Fig. 4 ergibt ist es dabei vorzugsweise so, dass das Primärmodul 9 aus der Regelung des Gesamtstroms die Führungsgröße für die Regelung der Gesamtspannung als Stellgröße ableitet.

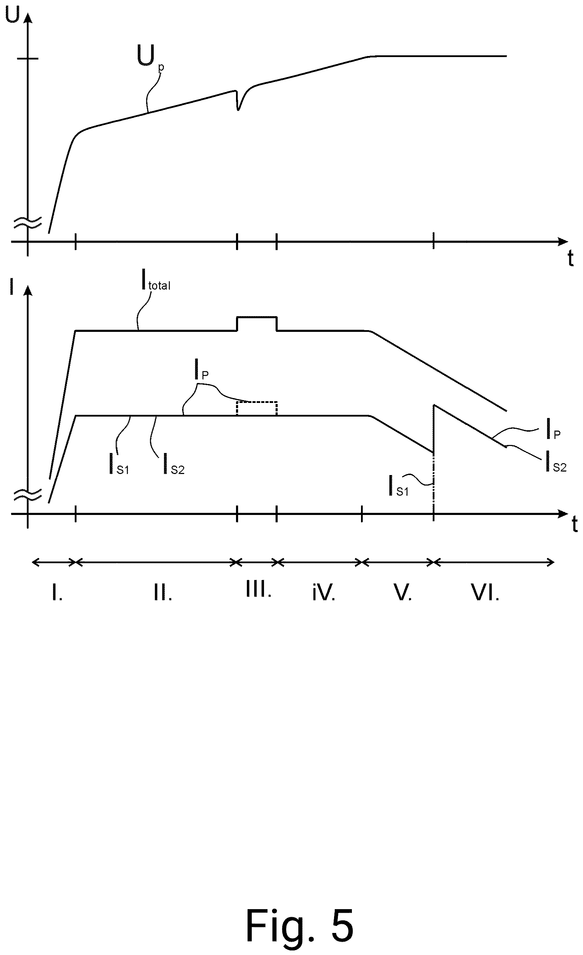

Ein Blick auf Fig. 5 ermöglicht die Erläuterung dieses Regelprinzips. Der Index P an Strom (I) und Spannung (U) steht dabei für das Primärmodul 9 und der Index S für die Sekundärmodule 10, von denen hier beispielhaft zwei vorhanden sind (S1, S2). In einem eingeschwungenen Zustand (Phase II nach einer Startphase I) regeln die Sekundärmodule 10 ihren Strom und das Primärmodul 9 regelt die Gesamtspannung. Das Primärmodul 9 erhält Messwerte des Gesamtstromsensors 15 über die Leistungssteuereinheit 12 und regelt Regelabweichungen des Gesamtstroms aus, indem es die Spannung anpasst. Dass der Weg über die Leistungssteuereinheit 12 erheblich langsamer ist, als die interne Regelung des Leistungsmoduls 4, ist dabei nicht relevant. Langsame Änderungen an der Stromanforderung können so umgesetzt werden. In Fig. 4 ist im Primärmodul 9 nach der Spannungsregelung noch eine Stromregelung gezeigt, die hier und vorzugsweise vorgesehen ist und beispielsweise für die Einhaltung eines Maximalstroms sorgt. Diese ist allerdings optional, ihre Funktion kann auch anders umgesetzt werden.

Benötigt das Elektrofahrzeug 2 nun abrupt mehr Leistung, weil zum Beispiel eine Heizung angeschaltet wird, kann es sein, dass diese Anforderung elektrisch direkt an der Schnellladestation 1 wirksam wird, ohne, dass eine Kommunikation rechtzeitig erfolgt wäre. Eine Regelung über die Leistungssteuereinheit 12 wäre in diesem Fall erheblich verzögert und könnte zum Abbruch des Ladevorgangs führen. Im ersten Moment kann diese Anforderung zu einem Einbrechen der Spannung am Anschlusspunkt 3 führen. Die Spannungsregelung des Primärmoduls 9 regelt diesen Spannungseinbruch dann allerdings sofort aus (Phase III). Zu diesem Zeitpunkt kann die von der Leistungssteuereinheit 12 kommende Stromvorgabe aufgrund der langsameren Reaktion noch auf dem vorherigen Stand sein, sodass die Gesamtstromregelung des Primärmoduls 9 nicht eingreift. Kurzzeitig wird der Gesamtstrom am Anschlusspunkt 3 durch die Spannungsregelung also erhöht. Anschließend oder währenddessen jedoch verzögert reagiert die Leistungssteuereinheit 12, die entweder den Messwert des Gesamtstromsensors 15 weiterleitet, wodurch die Gesamtstromregelung im Primärmodul 9 die Spannungsvorgabe reduziert und der Gesamtstrom wieder auf den ursprünglichen Wert geregelt wird oder die Leistungssteuereinheit 12 erhöht die Gesamtstromvorgabe beispielsweise aufgrund einer Kommunikation mit dem Elektrofahrzeug 2 (Phase IV). Die Gesamtstromregelung könnte grundsätzlich auch in der Leistungssteuereinheit 12 angeordnet sein. Die Sekundärmodule 10 reagieren nicht oder kaum.

Weiter ist hier und vorzugsweise vorgesehen, dass die Leistungssteuereinheit 12 die Regelungsvorgaben so erstellt, dass das Primärmodul 9 eine höhere zweiseitige Regelreserve aufweist als das oder die Sekundärmodule 10. Hier und vorzugsweise weist das Primärmodul 9 beispielsweise bei Ausnutzung von 60 % bis 80 %, vorzugsweise 40 % bis 80 %, weiter vorzugsweise 20 % bis 90 % der Gesamtleistung der Schnellladestation 1 an einem Anschlusspunkt 3, während der andere nicht belegt ist, eine höhere Regelreserve auf als jedes Sekundärmodul 10. Ist das Primärmodul 9 bereits am Limit seiner Leistung kann es in eine Richtung nicht reagieren. Kann jedes Leistungsmodul 4 bei gegebener Spannung also beispielsweise 60 A stellen und sind von drei Leistungsmodulen 4 gesamt 160 A gefordert, würden die Sekundärmodule 10 beispielsweise je 60 A stellen und das Primärmodul 9 40 A, wodurch dieses noch eine Regelreserve von 20 A nach oben und 40 A nach unten hat.

Vorzugsweise erstellt die Leistungssteuereinheit 12 die Regelungsvorgaben so, dass das Primärmodul 9 bei abrupter Erhöhung oder Absenkung der von dem Elektrofahrzeug 2 elektrisch angeforderten Leistung in beide Richtungen die gleiche Regelreserve plus-minus höchstens 5 %, vorzugsweise höchstens 2 %, aufweist. Die Regelreserve kann den Strom und/oder die Spannung und/oder die Leistung betreffen, hier und vorzugsweise die Leistung oder den Strom.

Weiter ist hier und vorzugsweise vorgesehen, dass die Leistungssteuereinheit 12 nach einem Effizienzalgorithmus aus den verfügbaren Leistungsmodulen 4 eine Untermenge auswählt und dem Anschlusspunkt 3 zuordnet. Es kann beispielsweise effizienter sein, vier Leistungsmodule 4 bei etwa 50 % ihrer Maximalleistung zu betreiben als zwei Leistungsmodule 4 bei etwa 100 % ihrer Maximalleistung. Fig. 5 zeigt in Phase V ein Abnehmen des Ladestroms und beim Beginn von Phase VI das Abschalten eines Leistungsmoduls 4 und gleichzeitiges Hochregeln der anderen Leistungsmodule 4 (idealisiert). Hier und vorzugsweise ist es nämlich so, dass die Leistungssteuereinheit 12 die Untermenge während des Ladevorgangs nach einem Effizienzalgorithmus anpasst.

Weiter ist hier und vorzugsweise vorgesehen, dass die Leistungssteuereinheit 12 über einen Bus, insbesondere CAN-Bus, mit den Leistungsmodulen 4 kommuniziert, vorzugsweise, dass die Regelungsvorgaben und/oder das Sensorsignal des Gesamtstromsensors 15 über den Bus übertragen werden. Insbesondere ein CAN-Bus ist relativ langsam, robust gegenüber elektrischen Störfeldern und günstig und daher vorliegend gut verwendbar.

Auch denkbar ist, dass die Leistungssteuereinheit 12 auf Basis einer Alterungsmetrik der Leistungsmodule 4 aus den verfügbaren Leistungsmodulen 4 eine Untermenge auswählt und dem Anschlusspunkt 3 zuordnet, und/oder, dass die Leistungssteuereinheit 12 auf Basis der Alterungsmetrik der Leistungsmodule 4 die Regelungsvorgaben ermittelt, vorzugsweise derart, dass die Leistungssteuereinheit 12 den Sekundärmodulen 10 unterschiedliche Ausgangsströme als Führungsgrößen zuweist. Ältere Leistungsmodule 4 können so geschont werden, um beispielsweise eine gemeinsame Wartung oder einen gemeinsamen Austausch zu ermöglichen. Die Alterungsmetrik bezieht sich dabei hier und vorzugsweise auf die Betriebsstunden insbesondere relativ zur Last während des Betriebs.

Bevorzugt ist es so, dass die Regelungsmodule 11 der Leistungsmodule 4 derart gleich, insbesondere identisch, sind, dass das Primärmodul 9 aus den einem Anschlusspunkt 3 gewählten Leistungsmodulen 4 frei gewählt werden kann. Es ist also hier und vorzugsweise so, dass kein dediziertes Primärmodul 9 vorgesehen ist, das sich irgendwie von den anderen Leistungsmodulen 4 unterscheidet, sondern dass jedes Leistungsmodul 4 als Primärmodul 9 fungieren kann. Vorzugsweise wird bei einem Ausfall eines Leistungsmoduls 4, das als Primärmodul 9 verwendet wurde, ein anderes Leistungsmodul 4 als Primärmodul 9 verwendet wird. So kann die Schnellladestation 1 auch bei Defekt eines oder mehrerer Leistungsmodule 4 weiter verwendet werden.

Weiter ist hier und vorzugsweise vorgesehen, dass die Schnellladestation 1 mindestens einen weiteren Anschlusspunkt 3 aufweist, dass die Ausgangsanschlüsse 6 von mindestens zwei Leistungsmodulen 4 zur Abgabe elektrischer Leistung an dem weiteren Anschlusspunkt 3 der Schnellladestation 1 zu einer zweiten Gruppe parallel geschaltet werden, dass mindestens ein Leistungsmodul 4, vorzugsweise alle Leistungsmodule 4, wahlweise der ersten Gruppe 7 oder der zweiten Gruppe zugeordnet werden kann oder können, und, dass die zweite Gruppe, insbesondere immer genau, ein Primärmodul 9 und mindestens ein Sekundärmodul 10 aufweist.

Vorgeschlagen wird gemäß einer weiteren Lehre ein Verfahren zur Steuerung einer vorschlagsgemäßen Schnellladestation 1 für Elektrofahrzeuge 2, wobei die Schnellladestation 1 mehrere Leistungsmodule 4 aufweist, wobei die Leistungsmodule 4 jeweils eine Stromrichteranordnung 5 insbesondere zur Wandlung einer Wechselspannung als Eingangsspannung der Schnellladestation 1 in eine Gleichspannung als Ausgangsspannung der Schnellladestation 1 aufweisen, wobei die Leistungsmodule 4 Ausgangsanschlüsse 6 aufweisen, an denen das Leistungsmodul 4 elektrische Leistung mit geregelten Ausgangsparametern abgibt, wobei die Ausgangsanschlüsse 6 von mindestens zwei Leistungsmodulen 4 zur Abgabe elektrischer Leistung an mindestens einem Anschlusspunkt 3 der Schnellladestation 1 zu einer ersten Gruppe 7 parallel geschaltet werden.

Wesentlich nach dieser weiteren Lehre ist, dass die erste Gruppe 7, insbesondere immer genau, ein Primärmodul 9 und mindestens ein Sekundärmodul 10 aufweist, dass die Leistungsmodule 4 jeweils ein Regelungsmodul 11 aufweisen, das die Stromrichteranordnung 5 des jeweiligen Leistungsmoduls 4 regelt, dass das Regelungsmodul 11 des Primärmoduls 9 eine Gesamtregelung für den Anschlusspunkt 3 übernimmt, dass das Regelungsmodul 11 oder die Regelungsmodule 11 des Sekundärmoduls 10 oder der Sekundärmodule 10 mindestens einen ihrer Ausgangsparameter regeln.

Auf alle Ausführungen zu der vorschlagsgemäßen Schnellladestation 1 darf verwiesen werden.

Vorgeschlagen wird gemäß einer weiteren Lehre ein Leistungsmodul 4 eingerichtet zur Verwendung in einer vorschlagsgemäßen Schnellladestation 1.

Auf alle Ausführungen zu der vorschlagsgemäßen Schnellladestation 1 und dem vorschlagsgemäßen Verfahren darf verwiesen werden.

Weiter ist hier und vorzugsweise vorgesehen, dass das Leistungsmodul 4 ein Regelungsmodul 11 aufweist, das so eingerichtet ist, dass das Leistungsmodul 4 als Primärmodul 9 und als Sekundärmodul 10 verwendet werden kann.

### Bezugszeichenliste

- 1: Schnellladestation
- 2: Elektrofahrzeug
- 3: Anschlusspunkt
- 4: Leistungsmodule
- 5: Stromrichteranordnung
- 6: Ausgangsanschluss
- 7: erste Gruppe
- 8: Gleichspannungsschiene
- 9: Primärmodul
- 10: Sekundärmodul
- 11: Regelungsmodul
- 12: Leistungssteuereinheit
- 13: Batterie
- 14: Batteriemanagementsystem
- 15: Gesamtstromsensor

## Patentansprüche

1. Schnellladestation für Elektrofahrzeuge (2), wobei die Schnellladestation (1) mehrere Leistungsmodule (4) aufweist, wobei die Leistungsmodule (4) jeweils eine Stromrichteranordnung (5) insbesondere zur Wandlung einer Wechselspannung als Eingangsspannung der Schnellladestation (1) in eine Gleichspannung als Ausgangsspannung der Schnellladestation (1) aufweisen, wobei die Leistungsmodule (4) Ausgangsanschlüsse (6) aufweisen, an denen das Leistungsmodul (4) elektrische Leistung mit geregelten Ausgangsparametern abgibt, wobei die Ausgangsanschlüsse (6) von mindestens zwei Leistungsmodulen (4) zur Abgabe elektrischer Leistung an mindestens einem Anschlusspunkt (3) der Schnellladestation (1) zu einer ersten Gruppe (7) parallel geschaltet werden,
**dadurch gekennzeichnet,**
**dass** die erste Gruppe (7), insbesondere immer genau, ein Primärmodul (9) und mindestens ein Sekundärmodul (10) aufweist, dass die Leistungsmodule (4) jeweils ein Regelungsmodul (11) aufweisen, das die Stromrichteranordnung (5) des jeweiligen Leistungsmoduls (4) regelt, dass das Regelungsmodul (11) des Primärmoduls (9) eine Gesamtregelung für den Anschlusspunkt (3) übernimmt, dass das Regelungsmodul (11) oder die Regelungsmodule (11) des Sekundärmoduls (10) oder der Sekundärmodule (10) mindestens einen ihrer Ausgangsparameter regeln.

2. Schnellladestation nach Anspruch 1, **dadurch gekennzeichnet, dass** das Primärmodul (9) die Gesamtspannung des Anschlusspunkts (3) regelt, insbesondere indem es seine Ausgangsspannung regelt, und so als Spannungsquelle funktioniert, und/oder,
dass das Sekundärmodul (10) seinen Ausgangsstrom regelt und so als Stromquelle funktioniert, oder, dass die Sekundärmodule (10) ihren Ausgangsstrom regeln und so als Stromquellen funktionieren.

3. Schnellladestation nach Anspruch 1 oder 2, **dadurch gekennzeichnet, dass** das Regelungsmodul (11) des jeweiligen Leistungsmoduls (4) mit dem Leistungsmodul (4) eine Einheit bildet, insbesondere in dem Leistungsmodul (4) angeordnet ist, vorzugsweise, dass die Leistungsmodule (4) jeweils einen Ausgangsstromsensor und einen Ausgangsspannungssensor aufweisen, die mit dem Leistungsmodul (4) eine Einheit bilden, und der Datenfluss zwischen dem Ausgangsstromsensor und/oder dem Ausgangsspannungssensor und dem Regelungsmodul (11) innerhalb der Einheit, insbesondere innerhalb des Leistungsmoduls (4), verläuft.

4. Schnellladestation nach einem der vorhergehenden Ansprüche, **dadurch gekennzeichnet, dass** die Schnellladestation (1) eine Leistungssteuereinheit (12) aufweist, dass die Leistungssteuereinheit (12) Regelungsvorgaben für die Leistungsmodule (4) erstellt, vorzugsweise, dass die Leistungssteuereinheit (12) eine Ausgangsleistung am Anschlusspunkt (3) über die Regelungsvorgabe auf die Leistungsmodule (4) verteilt, weiter vorzugsweise, dass die Leistungssteuereinheit (12) die Ausgangsleistung am Anschlusspunkt (3) indirekt verteilt und einen Ausgangsstrom pro Sekundärmodul (10) als Führungsgröße für die Sekundärmodule (10) erstellt.

5. Schnellladestation nach Anspruch 4, **dadurch gekennzeichnet, dass** die Leistungssteuereinheit (12) vom Elektrofahrzeug (2) einen Soll-Ausgangsstrom, und vorzugsweise eine Soll-Spannung und eine Maximal-Spannung, erhält, dass die Leistungssteuereinheit (12) den Soll-Ausgangsstrom auf die Leistungsmodule (4) verteilt, vorzugsweise, dass die Leistungssteuereinheit (12) dem oder den Sekundärmodulen (10) einen Ausgangsstrom als Führungsgröße zuweist und dem Primärmodul (9) den Gesamtstrom mitteilt.

6. Schnellladestation nach einem der Ansprüche 2 bis 5, **dadurch gekennzeichnet, dass** das Primärmodul (9) zusätzlich den Gesamtstrom des Anschlusspunkts (3) regelt, vorzugsweise, dass die Schnellladestation (1) einen Gesamtstromsensor (15) pro Anschlusspunkt (3) aufweist, der mit der Leistungssteuereinheit (12) verbunden ist, dass die Leistungssteuereinheit (12) ein Sensorsignal des Gesamtstromsensors (15), insbesondere direkt oder als Regelabweichung, an das Primärmodul (9) weitergibt, weiter vorzugsweise, dass das Primärmodul (9) aus der Regelung des Gesamtstroms die Führungsgröße für die Regelung der Gesamtspannung als Stellgröße ableitet.

7. Schnellladestation nach einem der Ansprüche 4 bis 6, **dadurch gekennzeichnet, dass** die Leistungssteuereinheit (12) die Regelungsvorgaben so erstellt, dass das Primärmodul (9) eine höhere zweiseitige Regelreserve aufweist als das oder die Sekundärmodule (10), vorzugsweise, dass die Leistungssteuereinheit (12) die Regelungsvorgaben so erstellt, dass das Primärmodul (9) bei abrupter Erhöhung oder Absenkung der von dem Elektrofahrzeug (2) elektrisch angeforderten Leistung in beide Richtungen die gleiche Regelreserve plus-minus höchstens 5 %, vorzugsweise höchstens 2 %, aufweist.

8. Schnellladestation nach einem der Ansprüche 4 bis 7, **dadurch gekennzeichnet, dass** die Leistungssteuereinheit (12) nach einem Effizienzalgorithmus aus den verfügbaren Leistungsmodulen (4) eine Untermenge auswählt und dem Anschlusspunkt (3) zuordnet, vorzugsweise, dass die Leistungssteuereinheit (12) die Untermenge während des Ladevorgangs nach einem Effizienzalgorithmus anpasst.

9. Schnellladestation nach einem der Ansprüche 4 bis 8, **dadurch gekennzeichnet, dass** die Leistungssteuereinheit (12) über einen Bus, insbesondere CAN-Bus, mit den Leistungsmodulen (4) kommuniziert, vorzugsweise, dass die Regelungsvorgaben und/oder das Sensorsignal des Gesamtstromsensors (15) über den Bus übertragen werden.

10. Schnellladestation nach einem der Ansprüche 4 bis 9, **dadurch gekennzeichnet, dass** die Leistungssteuereinheit (12) auf Basis einer Alterungsmetrik der Leistungsmodule (4) aus den verfügbaren Leistungsmodulen (4) eine Untermenge auswählt und dem Anschlusspunkt (3) zuordnet, und/oder, dass die Leistungssteuereinheit (12) auf Basis der Alterungsmetrik der Leistungsmodule (4) die Regelungsvorgaben ermittelt, vorzugsweise derart, dass die Leistungssteuereinheit (12) den Sekundärmodulen (10) unterschiedliche Ausgangsströme als Führungsgrößen zuweist.

11. Schnellladestation nach einem der vorhergehenden Ansprüche, **dadurch gekennzeichnet, dass** die Regelungsmodule (11) der Leistungsmodule (4) derart gleich, insbesondere identisch, sind, dass das Primärmodul (9) aus den einem Anschlusspunkt (3) gewählten Leistungsmodulen (4) frei gewählt werden kann, vorzugsweise, dass bei einem Ausfall eines Leistungsmoduls (4), das als Primärmodul (9) verwendet wurde, ein anderes Leistungsmodul (4) als Primärmodul (9) verwendet wird.

12. Schnellladestation nach einem der vorhergehenden Ansprüche, **dadurch gekennzeichnet, dass** die Schnellladestation (1) mindestens einen weiteren Anschlusspunkt (3) aufweist, dass die Ausgangsanschlüsse (6) von mindestens zwei Leistungsmodulen (4) zur Abgabe elektrischer Leistung an dem weiteren Anschlusspunkt (3) der Schnellladestation (1) zu einer zweiten Gruppe parallel geschaltet werden, dass mindestens ein Leistungsmodul (4), vorzugsweise alle Leistungsmodule (4), wahlweise der ersten Gruppe (7) oder der zweiten Gruppe zugeordnet werden kann oder können, dass die zweite Gruppe, insbesondere immer genau, ein Primärmodul (9) und mindestens ein Sekundärmodul (10) aufweist.

13. Verfahren zur Steuerung einer Schnellladestation (1) für Elektrofahrzeuge (2) nach einem der vorhergehenden Ansprüche, wobei die Schnellladestation (1) mehrere Leistungsmodule (4) aufweist, wobei die Leistungsmodule (4) jeweils eine Stromrichteranordnung (5) insbesondere zur Wandlung einer Wechselspannung als Eingangsspannung der Schnellladestation (1) in eine Gleichspannung als Ausgangsspannung der Schnellladestation (1) aufweisen, wobei die Leistungsmodule (4) Ausgangsanschlüsse (6) aufweisen, an denen das Leistungsmodul (4) elektrische Leistung mit geregelten Ausgangsparametern abgibt, wobei die Ausgangsanschlüsse (6) von mindestens zwei Leistungsmodulen (4) zur Abgabe elektrischer Leistung an mindestens einem Anschlusspunkt (3) der Schnellladestation (1) zu einer ersten Gruppe (7) parallel geschaltet werden,
**dadurch gekennzeichnet,**
**dass** die erste Gruppe (7), insbesondere immer genau, ein Primärmodul (9) und mindestens ein Sekundärmodul (10) aufweist, dass die Leistungsmodule (4) jeweils ein Regelungsmodul (11) aufweisen, das die Stromrichteranordnung (5) des jeweiligen Leistungsmoduls (4) regelt, dass das Regelungsmodul (11) des Primärmoduls (9) eine Gesamtregelung für den Anschlusspunkt (3) übernimmt, dass das Regelungsmodul (11) oder die Regelungsmodule (11) des Sekundärmoduls (10) oder der Sekundärmodule (10) mindestens einen ihrer Ausgangsparameter regeln.

14. Leistungsmodul eingerichtet zur Verwendung in einer Schnellladestation (1) nach einem der Ansprüche 1 bis 12.

15. Leistungsmodul nach Anspruch 14, **dadurch gekennzeichnet, dass** das Leistungsmodul (4) ein Regelungsmodul (11) aufweist, das so eingerichtet ist, dass das Leistungsmodul (4) als Primärmodul (9) und als Sekundärmodul (10) verwendet werden kann.
